# EUROPÄISCHE PATENTANMELDUNG

(11) **EP 3 315 435 A1**
(43) Veröffentlichungstag der Anmeldung: **02.05.2018**
(21) Anmeldenummer: 17001671.1
(22) Anmeldetag: 11.10.2017
(51) Int. Cl.: B65G 47/24, B65G 21/20, B65G 47/14

(54) **VORRICHTUNG ZUM TRANSPORT VON MAGNETISIERBAREN OBJEKTEN**

(30) Priorität: 26.10.2016 DE 102016012804
(71) Anmelder: Neumayer Tekfor Engineering GmbH, 77756 Hausach (DE)
(72) Erfinder: Echle, Joachim, 77709 Oberwolfach (DE)

(57) **Zusammenfassung**

Vorrichtung (1) zum Transport von magnetisierbaren Objekten (10). Dabei weist die Vorrichtung ein Transportband (2) und eine Magnetvorrichtung (3) auf wobei die Magnetvorrichtung (3) mehrere Magnetelemente (30) aufweist, wobei die Magnetelemente (30) Magnetfelder erzeugen, und wobei Abstände (A) zwischen jeweils zwei benachbarten Magnetfeldern entlang des Transportbandes (2) zunehmen so dass die Magnetvorrichtung (3) eine auf die Objekte (10) wirkende magnetische Kraft erzeugt, die entlang des Transportbandes (2) abnimmt durch.

## Beschreibung

Die vorliegende Erfindung betrifft eine Vorrichtung zum Transport von magnetisierbaren Objekten. Dabei weist die Vorrichtung ein Transportband und eine Magnetvorrichtung auf.

Der DE 1 074 488 lässt sich ein magnetischer Förderer entnehmen, bei dem magnetisierbares Fördergut (beispielsweise Eisenspäne) transportiert wird, indem es an einem magnetischen Förderband anhaftet. Das endlose Förderband weist hierfür Magnete auf. Oberhalb des Bandes befindet sich eine Gleitplatte, die schräg angeordnet ist, sodass die Eisenspäne durch die Magnete eine Aufwärtsbewegung erfahren. Eine solche Vorrichtung erlaubt beispielsweise das Trennen von magnetisierbaren Objekten aus einer Mischung.

Ähnlich aufgebaute Magnetförderer offenbaren beispielsweise die DE 2 103 147 A oder die FR 2 561 217 A1.

Eine Trennung von Objekten mit unterschiedlichen Anteilen an ferroelektrischem Material wird in der DE 26 01 417 A1 beschrieben. Dabei werden die Objekte durch magnetische Felder mit unterschiedlicher Intensität geleitet. Die Objekte werden in Richtung der Erdanziehung unterhalb von Magneten entlanggeführt und die Stärke der Magnete und die Abstände zwischen ihnen sind so bemessen, dass nur Objekte aus ferroelektrischem Material weiterlaufen und nicht abfallen.

Eine Verbesserung eines magnetischen Förderers ergibt sich, wenn eine Vereinzelung und Ausrichtung von magnetisierbaren Objekten erzielt wird. Eine solche Ausgestaltung zeigt die DE 1 481 376, bei der ebenfalls ein mit Magneten versehenes Endlosband Verwendung findet. Dabei wird eine Ausrichtung der Objekte (Stifte, Schrauben, Scheiben usw.) erreicht, indem die Objekte Tore passieren müssen und indem die Magnetfelder der Magnete besonders ausgerichtet sind. Die Objekte haften dabei an den Magneten an und richten sich mit den Feldlinien aus.

Die Aufgabe der Erfindung besteht darin, eine Vorrichtung zum Transport von magnetisierbaren Objekten vorzuschlagen, die eine Alternative zum Stand der Technik darstellt.

Die Erfindung löst die Aufgabe mit einer Vorrichtung zum Transport von magnetisierbaren Objekten. Dabei erzeugt die Magnetvorrichtung eine auf die Objekte wirkende magnetische Kraft, die entlang des Transportbandes abnimmt. Mit anderen Worten: Die Magnetvorrichtung ist derartig ausgestaltet, dass eine auf die Objekte wirkende magnetische Kraft entlang des Transportbandes abnimmt. Durch die Ausgestaltung der Magnetvorrichtung nimmt somit eine Feldstärke eines auf die Objekte wirkenden Magnetfeldes entlang des Transportbandes und somit insbesondere in einer ausgezeichneten Richtung ab. Dadurch reduziert sich auch eine Haltekraft auf die Objekte, sodass insbesondere in einer Ausgestaltung eine entgegen der magnetischen Kraft wirkende Kraft entlang des Transportbandes stärker auf die Objekte einwirken kann.

Bei einigen Anwendungsfällen wird darauf Bezug genommen, dass die Objekte (oder auch Werkstücke) nicht vollständig symmetrisch ausgestaltet sind. Dies bringt es - in einigen Anwendungen - mit sich, dass z. B. größere Flächen der Objekte stärker von der Magnetvorrichtung angezogen werden als kleinere Flächen. Das bedeutet, dass die Haltekraft auch von der Orientierung der Objekte abhängig ist. Reduziert sich daher die auf die Objekte wirkende magnetische Kraft, so kann diese bei den größeren Flächen noch ausreichend groß sein, sodass diese Objekte weiterhin von der Magnetvorrichtung gehalten werden. Bei den Objekten, deren kleinere Flächen der Magnetvorrichtung zugewandt sind, kann es jedoch sein, dass die durch die Magnetvorrichtung erzeugte Haltekraft nicht mehr ausreichend ist. Darüber lässt sich die Ausrichtung der Objekte realisieren, wie im Folgenden beschrieben wird.

Eine Ausgestaltung sieht vor, dass die Vorrichtung eine Bewegungsvorrichtung aufweist. Die Bewegungsvorrichtung und das Transportband bewegen die Objekte in eine Laufrichtung. Dabei nimmt die von der Magnetvorrichtung erzeugte und auf die Objekte wirkende magnetische Kraft in Laufrichtung ab. Mit anderen Worten: Die Bewegungsvorrichtung und das Transportband sind derartig ausgestaltet und aufeinander abgestimmt, dass die Bewegungsvorrichtung und das Transportband die Objekte in eine Laufrichtung bewegen. Weiterhin ist die Magnetvorrichtung derartig ausgestaltet, dass die auf die Objekte wirkende magnetische Kraft in Laufrichtung abnimmt. Bei dieser Ausgestaltung werden die Objekte auf dem Transportband in eine Laufrichtung bewegt. Entlang dieser Richtung nimmt die magnetische Kraft ab, sodass anfänglich eine größere Haltekraft auf die Objekte einwirkt und sodass die Haltekraft mit fortschreitendem Transportweg der Objekte abnimmt. Je weiter die Objekte bewegt werden, desto leichter kann sich daher eine zweite Kraft, die entgegen der magnetischen (Halte-)Kraft wirkt, die Objekte von dem Transportband "abziehen" bzw. zum Kippen in Richtung mit einer höheren Haltekraft bringen.

Eine Ausgestaltung beinhaltet, dass die Magnetvorrichtung mehrere Magnetelemente aufweist, die Magnetfelder erzeugen. Dabei nehmen Abstände zwischen jeweils zwei benachbarten Magnetfeldern entlang des Transportbandes zu. Mit anderen Worten: Die Magnetelemente sind derartig ausgestaltet und relativ zueinander angeordnet, dass Abstände zwischen jeweils zwei benachbarten Magnetfeldern entlang des Transportbandes bzw. in Laufrichtung zunehmen, also in dieser Richtung größer werden. In einer Ausgestaltung sind die Magnetelemente derartig ausgestaltet, dass sie im Wesentlichen jeweils das gleiche magnetische Feld erzeugen. Haben die Magnetelemente zunehmenden Abstand zueinander, so nimmt insgesamt die magnetische Kraft, die auf die Objekte einwirkt, ab. In einer Ausgestaltung sind dabei die Abstände zwischen den Magnetelementen kleiner oder gleich der größten Ausdehnung der Objekte. Mit dieser Ausgestaltung wird verhindert, dass sich die Objekte in einem Bereich ohne magnetische Kraft befinden.

Gemäß einer Ausgestaltung sind die jeweils um die Magnetelemente erzeugten - einzelnen - Magnetfelder gleich. Die Magnetelemente erzeugen jeweils ein Magnetfeld um sich herum. Dabei haben diese einzelnen Magnetfelder jeweils die gleiche Feldstärke. Bedingt durch den Abstand zwischen den Magnetelementen ergibt sich das gesamte Magnetfeld der Magnetvorrichtung, dessen magnetische Kraft entlang des Transportbandes und in einer Ausgestaltung insbesondere in Laufrichtung abnimmt.

Eine Ausgestaltung sieht vor, dass die Magnetelemente als Permanentmagnete ausgestaltet sind.

Die Magnetvorrichtung ist in einer Ausgestaltung insbesondere derartig ausgeführt, dass in Abhängigkeit vom Gewicht und/oder von der Geometrie der Objekte und/oder in Abhängigkeit von der Beschaffenheit des Transportbandes und/oder in Abhängigkeit von der entgegen der magnetischen Haltekraft wirkenden Kraft die erzeugte Haltekraft ausreichend ist, um ein Objekt mit wenigstens einer Ausrichtung (in einer weiteren Ausgestaltung nur mit einer Ausrichtung) auf dem Transportband zu halten. In dieser Ausgestaltung werden also weniger Ausrichtungen bzw. wird nur eine Ausrichtung der Objekte ausgewählt, mit denen die Objekte bis zu einem Ende des Transportbandes transportiert werden. Diese Ausrichtungen sind dabei vorzugsweise durch besonders große Wirkflächen der Objekte gegeben bzw. ist die eine Ausrichtung gegeben durch die größte Wirk- bzw. Auflagefläche der Objekte.

Eine Ausgestaltung beinhaltet, dass Änderungen der Abstände jeweils mit einem konstanten Vergrößerungswert erfolgen. In dieser Ausgestaltung nimmt der Abstand zwischen den Magnetelementen jeweils um den gleichen Vergrößerungswert zu. Dabei sind in einer Ausgestaltung auch Abstände vorhanden, die konstant sind, d. h. zwischen denen keine Vergrößerung vorliegt.

In einer alternativen Ausgestaltung ändern sich die Abstände mit variablen Vergrößerungswerten, wobei in einer alternativen oder ergänzenden Ausgestaltung einige Abstände entlang des Transportbandes sogar wieder kleiner werden.

In einer Ausgestaltung ist vorgesehen, dass einige Abstände im Wesentlichen gleich sind. In einer Ausgestaltung folgen diese konstanten Abstände aufeinander. Es gibt also Abschnitte, in denen sich die Abstände nicht ändern, sondern konstant bleiben. Dies betrifft jedoch nur einige der Abstände.

In einer Ausgestaltung weisen zwei Magnetelemente einen solchen Abstand zueinander auf, dass die von der Magnetvorrichtung in einem Bereich um die zwei Magnetelemente erzeugte magnetische Kraft nur dafür ausreichend ist, solche Objekte auf dem Transportband zu halten, die eine ausgewählte Ausrichtung relativ zum Transportband aufweisen. In einer weiteren Ausgestaltung sind mehrere ausgewählte Ausrichtungen vorgegeben, für die der Abstand passend zum Halten des Objekts vorgegeben ist. Die Ausrichtungen beziehen sich insbesondere darauf, mit welcher Seite das jeweilige Objekt auf dem Transportband anliegt. In dieser Ausgestaltung ist somit wenigstens ein Abstand so vorgegeben, dass nur die Objekte mit einer ausgewählten Ausrichtung oder mit einer von mehreren ausgewählten Ausrichtungen am Transportband durch die Magnetvorrichtung gehalten und dadurch weitertransportiert werden.

In einer weiteren Ausgestaltung ist nur einmal dieser vorgenannte - zumeist relativ große - Abstand vorgegeben und alle anderen Abstände sind im Wesentlichen konstant (und zumeist kleiner). Ergänzend ist in einer weiteren Ausgestaltung dieser vorgenannte Abstand mehrfach vorhanden.

In einer Ausgestaltung sind die Abstände zwischen den Magnetelementen derartig vorgegeben, dass insbesondere der größte Abstand es erlaubt, ein Objekt zu halten, dessen größte Fläche der Magnetvorrichtung zugewandt ist. In einer Ausgestaltung wird insbesondere darauf geachtet, dass Objekte über den jeweiligen Abstand hinweg sicher von Magnetelement zu Magnetelement übergeben werden.

In einer alternativen Ausgestaltung der Magnetvorrichtung werden die unterschiedlichen magnetischen Kräfte durch das Schalten von unterschiedlichen Magnetfeldern dynamisch erzeugt.

Eine Ausgestaltung beinhaltet, dass das Transportband derartig ausgestaltet und relativ zu den Magnetelementen der Magnetvorrichtung angeordnet ist, dass das Transportband relativ zu den Magnetelementen beweglich ist. Die Magnetelemente sind daher von dem Transportband getrennt und das Transportband wird relativ zu den Magnetelementen bewegt. In einer Ausgestaltung befinden sich die Objekte oberhalb des Transportbandes (und damit auf einer Transportseite des Transportbandes) und die Magnetelemente befinden sich unterhalb des Transportbandes (und damit unterhalb einer Innenseite des Transportbandes).

Eine Ausgestaltung sieht vor, dass das Transportband auf mindestens zwei Rollen gelagert und als Endlosband ausgestaltet ist. In einer Ausgestaltung ist das Transportband auf mindestens drei Rollen gelagert, die in einer Ausgestaltung ähnlich den Ecken eines rechtwinkligen Dreiecks angeordnet sind.

Gemäß einer Ausgestaltung ist mindestens eine Rolle Teil der Bewegungsvorrichtung. Die Bewegungsvorrichtung verfügt beispielsweise über einen Motor, der eine Rolle antreibt, sodass das Transportband bewegt wird.

Eine Ausgestaltung sieht vor, dass mindestens eine Rolle magnetische Eigenschaften aufweist. Diese magnetische Rolle erlaubt es beispielsweise, dass die Objekte von dem Transportband abgeführt bzw. in eine andere Richtung gelenkt werden.

Eine Ausgestaltung beinhaltet, dass das Transportband eine Objektannahmestelle und eine Objektabgabestelle aufweist. Dabei sieht es eine Ausgestaltung ergänzend vor, dass das Transportband zwischen der Objektannahmestelle und der Objektabgabestelle zumindest abschnittsweise einen Steigungswinkel aufweist. Das Transportband ist daher in einer Ausgestaltung zumindest abschnittsweise (in einer Ausgestaltung in dem Abschnitt zwischen zwei Rollen) so geneigt, dass es von einer Annahmestelle zu einer Abgabestelle (jeweils bezüglich der Objekte) vorzugsweise entgegen der Erdanziehung ansteigt.

Eine Ausgestaltung sieht vor, dass das Transportband zwischen der Objektannahmestelle und der Objektabgabestelle zumindest abschnittsweise im Wesentlichen parallel zu einer Richtung der Erdanziehung angeordnet ist. In dieser Ausgestaltung stellt die Erdanziehung die Kraft dar, die entgegen der Haltekraft wirkt. Das Transportband kann somit generell auch als Steigband bezeichnet werden.

In einer Ausgestaltung wirkt eine zweite Magnetvorrichtung entgegen der - somit ersten - Magnetvorrichtung. Oder mit anderen Worten: die Magnetvorrichtung erzeugt auf die magnetisierbaren Objekte eine Haltekraft und eine zweite Magnetvorrichtung bewirkt ein Ablösen der Objekte. Die zweite Magnetvorrichtung ist daher in dieser Ausgestaltung eine zu der Erdanziehung alternative Kraftquelle, die entgegen der Haltekraft der (ersten) Magnetvorrichtung wirkt. Alternativ wirkt eine andere Kraft - außer einer magnetischen oder der Schwerkraft - entgegen der Transportrichtung auf die Objekte.

Eine Ausgestaltung beinhaltet, dass die Vorrichtung eine Zuführvorrichtung aufweist. Dabei sind die Zuführvorrichtung und das Förderband derartig ausgestaltet und relativ zueinander angeordnet, dass die Zuführvorrichtung Objekte derartig transportiert, dass die zugeführten Objekte bei der Objektannahmestelle auf das Förderband gelangen. Die Zuführvorrichtung verfügt in einer Ausgestaltung über ein Endlosband. In einer Ausgestaltung sind die Zuführvorrichtung und das Transportband so relativ zueinander gesteuert, dass eine Vereinzelung der Objekte bei der Übergabe von der Zuführvorrichtung zum Transportband gegeben ist. Die Zuführung erfolgt somit beispielsweise nicht schneller als der Transport über das Transportband. Weiterhin ist ein solcher Abgleich gegeben, dass die einzelnen Objekte auf dem Transportband ausreichend Platz für einen Kippvorgang haben, der in einer Ausgestaltung zu ihrer Ausrichtung verwendet wird.

Im Einzelnen gibt es eine Vielzahl von Möglichkeiten, die erfindungsgemäße Vorrichtung auszugestalten und weiterzubilden. Dazu wird verwiesen einerseits auf die dem Patentanspruch 1 nachgeordneten Patentansprüche, andererseits auf die folgende Beschreibung von Ausführungsbeispielen in Verbindung mit der Zeichnung. Es zeigen:
- Fig. 1: einen Schnitt durch eine erfindungsgemäße Vorrichtung,
- Fig. 2: drei Phasen bei der Ausrichtung eines Objekts (Fig. 2 a) bis c)) und die Anordnung eines weiteren Objekts (Fig. 2 d)).

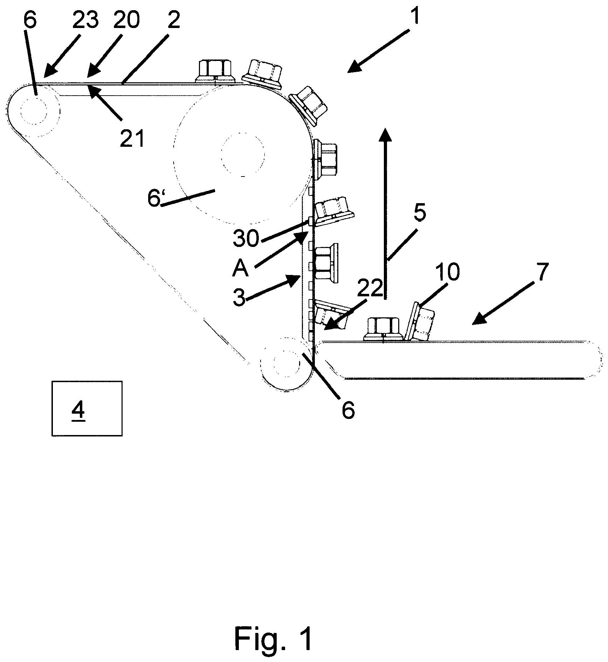

Die Fig. 1 zeigt einen Schnitt durch eine erfindungsgemäße Vorrichtung 1. Das Transportband 2, das als Endlosband ausgestaltet ist, ist auf drei Rollen 6, 6' gelagert. Die Rollen 6, 6' sind dabei derartig relativ zueinander angeordnet, dass sich für das Transportband 2 die Struktur eines rechtwinkligen Dreiecks ergibt. Die mittlere Rolle 6' ist dabei größer als die beiden anderen Rollen 6, die an einer Zuführ- bzw. einer Abführstelle für die auszurichtenden Objekte 10 angeordnet sind. Das Transportband ist so angeordnet, dass sich - gesehen von der Zuführvorrichtung 7 - zunächst ein Abschnitt ergibt, der hier parallel zur Erdanziehung verläuft. Daran schließt sich ein zweiter Abschnitt an, der senkrecht zum ersten Abschnitt angeordnet ist.

Das Transportband 2 verfügt über zwei Seiten: eine Transportseite 20, auf der sich die Objekte 10 befinden und die deren Transport dient, und eine davon abgewandte Seite 21, die sich auch als Innenseite bezeichnen lässt. Unterhalb des Transportbandes 2 befinden sich Magnetelemente 30 einer Magnetvorrichtung 3, wobei das Transportband 2 relativ zu den Magnetelementen 30 beweglich ist. Die Magnetelemente 30 sind dabei auch der Innenseite 21 zugewandt. Die Magnetelemente 30 und das Transportband 2 sind dabei so ausgestaltet und aufeinander abgestimmt, dass sich eine magnetische Kraft ergibt, die auf die magnetisierbaren Objekte 10 einwirkt.

Das Transportband 2 wird von einer Bewegungsvorrichtung 4, die beispielsweise ein Motor ist und auf mindestens eine der Rolle 6, 6' (über eine hier nicht dargestellte Übertragung der Bewegungskraft) einwirkt, in eine Bewegungsrichtung 5 bewegt. In der gezeigten Ausgestaltung bewegt sich das Transportband 2 somit entgegen der Erdanziehung nach oben. Die Objekte 10 werden dabei bedingt durch die Reibwirkung - und damit in Folge der Ausgestaltung der Transportseite 20 des Transportbandes 2 - in die Bewegungsrichtung 5 mitbewegt.

Die Magnetelemente 30 sind hier Permanentmagnete, die entlang des Transportbandes 2 und hier insbesondere entlang der Bewegungsrichtung 5 größere Abstände A zueinander aufweisen. Erzeugen die Magnetelemente 30 jeweils im Wesentlichen das gleiche Magnetfeld um sich herum, wird jedoch der Abstand A zwischen ihnen größer, so wird das insgesamt sich ergebende Magnetfeld, das sich aus den jeweiligen Einzelmagnetfeldern der Magnetelemente 30 zusammensetzt, jeweils schwächer. Dadurch wirkt in der Bewegungsrichtung 5 eine abnehmende magnetische Kraft als Haltekraft auf die Objekte 10.

Aufgrund der Ausrichtung des Transportbandes 2 wirkt das Schwerefeld der Erde auf die Objekte 10. Hier ist der Steigungswinkel insbesondere so, dass das Transportband 2 in dem Bereich, in dem sich die Magnetvorrichtung 3 befindet, parallel zur Erdanziehung verläuft, sodass also stets die volle Gewichtskraft auf die Objekte 10 einwirkt. Die Erdanziehung wirkt entgegen der magnetischen Kraft der Magnetvorrichtung 3. Da die magnetische Kraft der Magnetvorrichtung 3 in Bewegungsrichtung 5 abnimmt, können die Objekte 10 jeweils Bereiche erreichen, in denen die magnetische Haltekraft kleiner als die Gewichtskraft ist, weshalb die Objekte 10 sich vom Transportband 2 lösen bzw. kippen. Dabei ist zu beachten, dass die Objekte 10 in der hier gezeigten Anwendung nicht symmetrisch sind. Es gibt also Bereiche mit größeren und kleineren Flächen der Objekte 10, die der Transportseite 20 des Transportbandes 2 zugewandt sind. Es kann insbesondere sein, dass eine vollflächige Auflage je nach Ausrichtung des Objekts 10 prinzipiell nicht möglich ist. Relevant wird dabei, dass die Haltekraft nicht nur abhängig ist von dem wirkenden magnetischen Feld, sondern auch von der wirksamen Fläche des Objekts 10. D.h. die Haltekraft ist auch davon abhängig, welche Seite des Objekts 10 dem Transportband 2 zugewandt ist. Hat somit das magnetisierbare Objekte 10 unterschiedlich große Außenflächen, so hängt die Lage des Bereichs, in dem die Gewichtskraft größer als die Haltekraft ist, von der Orientierung des Objekts 10 ab. Je nach Orientierung lösen sich die Objekte 10 somit früher oder später von der Transportseite 20. Daher lassen sich die entgegen der Erdanziehung zu überwindende Strecke des Transportbands 2 und die Magnetvorrichtung 3 so aufeinander abstimmen, dass es Objekte 10 mit einer gewünschten Orientierung gerade bis zum Ende der Strecke schaffen und dass andere Orientierungen zu einem Sich-Lösen bzw. zu einem Herabfallen führen. Das Sich-Lösen bewirkt vorzugweise ein Kippen, sodass also die Objekte 10 in Richtung der Erdanziehung und damit auch in Richtung einer größeren Haltekraft durch den geringeren Abstand zwischen den Magnetelementen 30 gelangen. Der Effekt hängt dabei auch von der Bewegungsgeschwindigkeit des Transportbandes 2 ab.

Bei den magnetisierbaren Objekten 10 handelt es sich hier um Sicherungs-Muttern aus Metall, die einen Federteller aufweisen. Der Federteller ragt dabei über die Außenseite des Mutternkörpers heraus, wobei sich zwei stabile Auflagepositionen ergeben: der Teller ist der Transportseite 20 zugewandt oder die vom Teller abgewandte Stirnseite des Mutternkörpers ruht auf der Transportseite 20. Andere Objekte oder Werkstücke 10 sind beispielsweise Nocken.

Die Objekte 10 werden mit einer Zuführvorrichtung 7, die hier ebenfalls ein Endlosband aufweist, zu einer Objektannahmestelle 22 der Vorrichtung 1 zugeführt, von wo aus die Objekte 10 den Bereich mit der Magnetvorrichtung 3 bis zur mittleren Rolle 6' passieren. Die mittlere Rolle 6' - als Bandumlenker - verfügt hier über magnetische Eigenschaften, sodass die Objekte 10 sicher in den horizontalen Abschnitt des Transportbandes 2 verbracht werden. An einer Objektabgabestelle 23 werden die ausgerichteten Objekte 10 von dem Transportband 2 abgenommen.

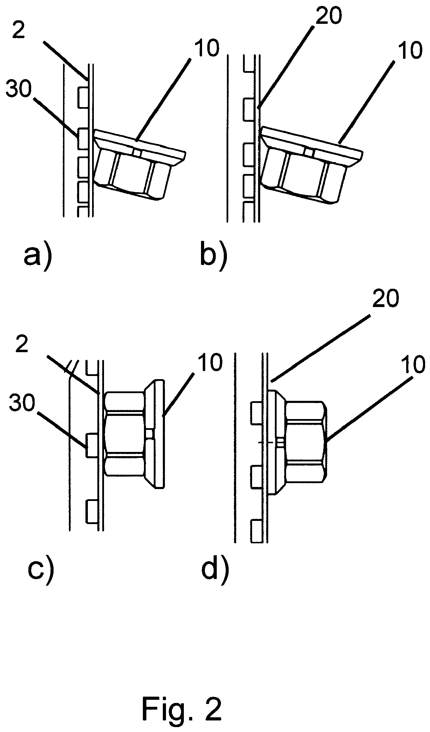

Den Vorgang des Ausrichtens eines Objekts zeigen die Fig. 2 a) bis c) mit drei beispielhaften Phasen. Die Figuren 2 a) und b) zeigen, wie die Abstände zwischen den Magnetelementen 30 in der Bewegungsrichtung größer werden. Damit verringert sich die magnetische Kraft, die die Objekte 10 an die Transportseite 20 des Transportbandes 2 heranzieht. Hier ist insbesondere zu erkennen, dass die äußere Form des Objekts 10 bedingt, dass das Objekt 10 nicht vollständig an der Transportseite 20 anliegen kann, sodass sich durch die Orientierung des Objekts 10 bereits eine reduzierte Haltekraft ergibt.

In der Fig. 2 b) befindet sich der Federteller des Objekts 10 gerade zwischen zwei Magnetelementen 30, sodass auf diesen Bereich eine deutlich kleinere Haltekraft als auf die Stirnseite des Mutternkörpers einwirkt, die sich hier unterhalb des Federtellers befindet. Dadurch kippt das obere Ende mit dem Federteller nach unten in Richtung Erdanziehung und das Objekt 10 dreht sich auf die Stirnseite (siehe Fig. 2 c)).

Wird das Transportband 2 somit relativ zu den Magnetelementen 30 bewegt und nimmt es bedingt durch die Reibung die Objekte 10 mit, so reduziert sich die Haltekraft entlang des Weges und so wird gleichzeitig die Erdanziehung dominanter, sodass hier - wie in der Fig. 2 c) dargestellt - sich die Objekte 10 so drehen, dass sie mit einer möglichst großen Fläche auf der Transportseite 20 des Transportbandes 2 zu liegen kommen. Die Ausrichtung der Objekte 10 bewirkt also, dass sie auf einer von - für das gezeigte Beispiel - zwei Stirnseiten zu liegen kommen. Das Objekt 10 der Fig. 2 d) ruht bereits mit der unteren Stirnseite des Federtellers auf der Transportseite 20. In einer Ausgestaltung ist daher ein Abstand so groß vorgegeben, dass nur diese Art von ausgerichteten Objekten mit dieser ausgewählten Ausrichtung diesen vorgegebenen größten Abstand passieren kann.

In einer weiteren Ausgestaltung ist die Magnetvorrichtung 3 derartig ausgestaltet, dass auch die Haltekraft der Orientierung der Fig. 2 c) mit der kleineren Stirnseite des Objekts 10 nicht ausreicht, sodass also das Objekt 10 weiter kippt, bis es auch die Ausrichtung des Objekts 10 der Fig. 2 d) erreicht hat.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

## Patentansprüche

1. Vorrichtung (1) zum Transport von magnetisierbaren Objekten (10),
wobei die Vorrichtung ein Transportband (2) und eine Magnetvorrichtung (3) aufweist,
**dadurch gekennzeichnet,**
**dass** die Magnetvorrichtung (3) eine auf die Objekte (10) wirkende magnetische Kraft erzeugt, die entlang des Transportbandes (2) abnimmt.

2. Vorrichtung (1) nach Anspruch 1,
wobei die Vorrichtung (1) eine Bewegungsvorrichtung (4) aufweist,
wobei die Bewegungsvorrichtung (4) und das Transportband (2) die Objekte (10) in eine Laufrichtung (5) bewegen, und
wobei die von der Magnetvorrichtung (3) erzeugte magnetische Kraft in Laufrichtung (5) abnimmt.

3. Vorrichtung (1) nach Anspruch 1 oder 2,
wobei die Magnetvorrichtung (3) mehrere Magnetelemente (30) aufweist,
wobei die Magnetelemente (30) Magnetfelder erzeugen, und
wobei Abstände (A) zwischen jeweils zwei benachbarten Magnetfeldern entlang des Transportbandes (2) zunehmen.

4. Vorrichtung (1) nach Anspruch 3,
wobei die von den Magnetelementen (30) erzeugten Magnetfelder gleich sind.

5. Vorrichtung (1) nach Anspruch 3 oder 4,
wobei Änderungen der Abstände (A) jeweils mit einem konstanten Vergrößerungswert erfolgen.

6. Vorrichtung (1) nach einem der Ansprüche 3 bis 5,
wobei einige Abstände (A) im Wesentlichen gleich sind.

7. Vorrichtung (1) nach einem der Ansprüche 3 bis 6,
wobei zwei Magnetelemente (30) einen solchen Abstand (A) zueinander aufweisen, dass die von der Magnetvorrichtung (3) in einem Bereich um die zwei Magnetelemente (30) erzeugte magnetische Kraft nur dafür ausreichend ist, solche Objekte (10) auf dem Transportband (2) zu halten, die eine ausgewählte Ausrichtung relativ zum Transportband (2) aufweisen.

8. Vorrichtung (1) nach einem der Ansprüche 1 bis 7,
wobei das Transportband (2) auf mindestens zwei Rollen (6, 6') gelagert und als Endlosband ausgestaltet ist, und
wobei mindestens eine Rolle (6) magnetische Eigenschaften aufweist.

9. Vorrichtung (1) nach einem der Ansprüche 1 bis 8,
wobei das Transportband (2) eine Objektannahmestelle (22) und eine Objektabgabestelle (23) aufweist, und
wobei das Transportband (2) zwischen der Objektannahmestelle (22) und der Objektabgabestelle (23) zumindest abschnittsweise einen Steigungswinkel aufweist.
